# EUROPÄISCHE PATENTANMELDUNG

(11) **EP 4 545 791 A1**
(43) Veröffentlichungstag der Anmeldung: **30.04.2025**
(21) Anmeldenummer: 24204146.5
(22) Anmeldetag: 02.10.2024
(51) Int. Cl.: F04D 13/06, F04D 29/66, F04D 29/041, F04D 29/047

(54) **TEMPERIERPUMPE**

(30) Priorität: 26.10.2023 DE 102023129579
(71) Anmelder: TI Automotive Technology Center GmbH, 76437 Rastatt (DE)
(72) Erfinder: Marfing, Loic, 76437 Rastatt (DE)
(74) Vertreter: Andrejewski - Honke Patent- und Rechtsanwälte Partnerschaft mbB

(57) **Zusammenfassung**

Eine Pumpe umfasst einen Stator (1) und einen Rotor (2), wobei der Rotor (2) einen Rotorkörper (3), einen Rotorblock (4) sowie ein Drehlager (5) aufweist. Der Rotor (2) bzw. der Rotorkörper (3) umfasst ein Pumpenrad (6) und eine Welle (7). Der Rotorkörper (3) weist ein Blockgehäuse (44) auf, das den Rotorblock (4) wenigstens teilweise einhaust. Der Rotor (2) weist für einen Sekundärstrom vorzugsweise mehrere Rückführkanäle (12) auf, die eine fluidische Verbindung zwischen einer Antriebskammer (11) und einer Radkammer (10) herstellen. Die Pumpe umfasst bevorzugt eine rotatorisch nicht bewegliche Achse (23), wobei der Rotor (2) drehbar auf der Achse (23) gelagert ist.

## Beschreibung

Die Erfindung betrifft eine Pumpe zum Antreiben eines Fluids, vorzugsweise eines Temperiermittels, insbesondere zur Verwendung in einem Fahrzeug, ganz besonders zur Verwendung zum Temperieren einer Antriebsbatterie eines Elektrofahrzeugs, wobei die Pumpe einen Stator und einen Rotor umfasst, wobei der Rotor einen Rotorkörper, einen Rotorblock sowie ein Drehlager aufweist, wobei der Rotor um eine Rotationsachse drehbar gelagert ist, wobei der Rotor bzw. Rotorkörper ein Pumpenrad und eine Welle umfasst, wobei der Rotor bzw. der Rotorkörper ein Blockgehäuse aufweist, das den Rotorblock wenigstens teilweise einhaust, wobei in einer axial oberen Hälfte der Pumpe wenigstens ein Abschnitt eines Einlasses der Pumpe angeordnet ist, wobei die Pumpe einen Auslass umfasst.

In EP 3 318 765 A1 ist eine elektrisch angetriebene Kühlmittelpumpe mit einem außenliegenden Stator und einem innenliegenden Rotor offenbart. Der Rotor umfasst einen Rotorkörper, ein oberes und ein unteres Drehlager sowie einen Rotorblock mit Magneten. Der Rotorblock ist teilweise von einem Blockgehäuse eingehaust. Der Rotorkörper weist ein Pumpenrad sowie eine Welle auf. Die Welle umfasst einen Verbindungsabschnitt und das Blockgehäuse, wobei der Verbindungsabschnitt das Blockgehäuse und das Pumpenrad in axialer Richtung verbindet. Der Rotorkörper ist als Spritzgussteil und damit integral ausgebildet, wobei das Blockgehäuse die Magnete in axialer Richtung umschließt. Die beiden Lager sind als Gleitdrehlager ausgebildet und lassen den Rotor reibungsarm um eine Achse drehen. Das obere Lager ist zusätzlich als Kipplager ausgestaltet, um die Reibung zwischen einer oberen Achshalterung und dem oberen Gleitlager zu minimieren. Im Betrieb erwärmen sich der Stator, der Rotor und die Steuerelektronik der Pumpe und bedürfen einer Kühlung. Diese wird durch einen Sekundärstrompfad gewährleistet, welcher einen Rückführkanal innerhalb des Rotors dicht am Rotorblock umfasst. Der Rückführkanal ist genau dort angeordnet, wo das untere Drehlager radial weniger ausladend ist. Hierdurch wird der Raum im Rotorkörper bzw. in der Welle optimal ausgenutzt.

In DE 10 2018 125 031 A1 ist eine Kühlmittelpumpe beschrieben, welche ebenfalls einen Sekundärstrompfad aufweist. Hierzu besitzt der Rotor mehrere Rückführkanäle, welche den Rotorblock von seiner radialen Innenseite her kühlen. Hierdurch wird der Rotorblock noch mehr gekühlt, während durch die Mehrzahl an Rückführkanälen gleichzeitig eine Unwucht des Rotors verringert und der Verschleiß reduziert wird. Der Rotorblock ist auf einem zentralen Rotorschaft befestigt, so dass der Rotorschaft drehbar in einer Mittelwand gelagert ist. Der Rotorschaft durchragt die Mittelwand und treibt ein Pumpenrad an. Hierzu umfasst die Mittelwand ein festsitzendes Drehlager, in welchem sich der Rotorschaft drehen kann. Das Drehlager überlappt sich in axialer Richtung nicht mit den Rückführkanälen im Rotorkörper, weil der Bauraum knapp ist. Stattdessen weist das Drehlager an seiner Innenseite axial verlaufende Nuten auf, welche in Strömungsrichtung des Sekundärstroms auf die Rückführkanäle des Rotors folgen. Diese feststehenden Nuten verbinden die sich drehenden Rückführkanäle des Rotorkörpers mit der Radkammer, wo sich der Sekundärstrom mit dem Hauptstrom vermischt.

Die bekannten Kühlmittelpumpen sind dazu ausgelegt, einen Verbrennungsmotor zu kühlen und laufen erst dann unter Volllast, wenn der Verbrennungsmotor schon eine Weile warm gelaufen ist. Dabei werden die bekannten Kühlmittelpumpen insbesondere vom Fahrtwind unterstützt. Der Erfindung liegt nun die Aufgabe zugrunde, eine Pumpe für das Thermomanagement eines Elektrofahrzeugs ("Temperierpumpe") und damit leistungsfähiger und gleichzeitig preiswert zu gestalten.

Die Energie- und Mobilitätswende erfordert den Ausbau neuer Technologien, worunter insbesondere Elektrofahrzeuge mit einer Antriebsbatterie und einem Elektromotor fallen. Antriebsbatterien erreichen bei Temperaturen um 20°C die größte Effizienz, so dass sie je nach Situation erwärmt oder gekühlt werden müssen. Eine Erwärmung ist insbesondere kurz nach dem Start im Winter zweckmäßig, während eine Kühlung vor allem dann in Betracht kommt, wenn das Fahrzeug schon eine Weile gefahren ist. Insofern unterscheidet sich das Thermomanagement des Antriebsstrangs bei Elektrofahrzeugen von Verbrennungsfahrzeugen vor allem in der kalten Jahreszeit. Letztlich muss die gesamte Komponentenkette (Rohre, Schnellverbinder, Pumpen, Batteriegehäuse, etc.) des Thermomanagements bei Elektrofahrzeugen dazu ausgelegt sein, zusätzlich auch in der kalten Jahreszeit und damit ohne Unterstützung des Fahrtwinds zu arbeiten. Dies bedeutet, dass - über das Jahr hinweg gesehen - ein relativ großer Durchsatz des Temperierfluids des Elektrofahrzeugs erforderlich ist. In der Folge muss die Kühlpumpe bzw. Temperierpumpe entsprechend leistungsfähig ausgebildet sein.

Diese Aufgabe wird gelöst durch eine Pumpe zum Antreiben eines Fluids, vorzugsweise eines Temperiermittels, insbesondere zur Verwendung in einem Fahrzeug, ganz besonders zur Verwendung zum Temperieren einer Antriebsbatterie eines Elektrofahrzeugs, wobei die Pumpe einen Stator und einen Rotor umfasst, wobei der Rotor einen Rotorkörper, einen Rotorblock sowie ein Drehlager umfasst, wobei der Rotor um eine Rotationsachse drehbar gelagert ist, wobei der Rotor bzw. Rotorkörper ein Pumpenrad und eine Welle aufweist, wobei der Rotor bzw. der Rotorkörper ein Blockgehäuse umfasst, das den Rotorblock wenigstens teilweise einhaust, wobei in einer axial oberen Hälfte der Pumpe wenigstens ein Abschnitt eines Einlasses der Pumpe angeordnet ist, wobei die Pumpe einen Auslass umfasst. Dies ermöglicht die Ausgestaltung der Pumpe derart, dass die eingangs genannte Aufgabe gelöst wird.

Es ist bevorzugt, dass die Pumpe ein Gehäuse und eine Trennwand umfasst, wobei die Trennwand einen Raum innerhalb des Gehäuses in einen Nassbereich und einen Trockenbereich trennt. Der Nassbereich weist mit Vorteil eine Radkammer und eine Antriebskammer auf, wobei das Pumpenrad in der Radkammer befindlich ist. Vorzugsweise ist das Blockgehäuse in der Antriebskammer angeordnet. Es ist möglich, dass die Pumpe eine Platine zur Steuerung des Pumpenbetriebs aufweist. Zweckmäßigerweise ist der Stator und/oder die Platine in dem Trockenbereich befindlich. Dies erlaubt einen Schutz der elektrischen/elektronischen Komponenten und gleichzeitig eine Umspülung des Rotors.

Vorzugsweise ist das Pumpenrad in Strömungsrichtung eines Hauptstrompfads des Fluids zweckmäßigerweise zwischen dem Einlass und dem Auslass angeordnet. Mit Vorteil ist die Pumpe so ausgebildet, dass von dem Hauptstrompfad ein Sekundärstrompfad des Fluids abzweigt und der Sekundärstrompfad sich von der Radkammer in die Antriebskammer erstreckt. Dies ermöglicht eine Kühlung des Stators, Rotors bzw. Rotorblocks und/oder der Platine.

Gemäß einer sehr bevorzugten Ausführungsform weist der Rotor bzw. Rotorkörper für den Sekundärstrom wenigstens einen Rückführkanal und vorteilhafterweise mehrere Rückführkanäle auf, die eine fluidische Verbindung zwischen der Antriebskammer und der Radkammer herstellen. Zweckmäßigerweise sind die Rückführkanäle über Trennelemente des Rotors bzw. Rotorkörpers voneinander getrennt. Der Erfindung liegt die Erkenntnis zugrunde, dass ein besonders kritischer Aspekt der Leistungsfähigkeit ein möglichst geringer Verschleiß ist. Ein geringerer Verschleiß ist entscheidend für die Verringerung der Reparaturwahrscheinlichkeit bezüglich der Pumpe während der Lebensdauer des Elektrofahrzeugs. Es wurde gefunden, dass der Verschleiß vor allem am Drehlager des Rotors stattfindet. Dieser Verschleiß hängt neben der Gesamtlaufleistung (durchschnittliche Zahl der Umdrehungen bis zum Lebensende der Pumpe) vor allem mit einer auftretenden Unwucht im Rotor zusammen. Der Erfindung liegt die Erkenntnis zugrunde, dass das Vorsehen einer Mehrzahl an Rückführkanälen innerhalb des Rotors dessen Unwucht deutlich verringert, wodurch schließlich auch der Verschleiß verringert, die Gesamtlaufleistung erhöht und die Leistungsfähigkeit der Pumpe verbessert wird.

Es ist besonders bevorzugt, dass die Pumpe eine rotatorisch nicht bewegliche Achse umfasst, wobei der Rotor drehbar auf der Achse gelagert ist. Dies erlaubt einen besonders geringen Verschleiß am Drehlager und begünstigt eine lange Lebensdauer. Die Achse umfasst vorzugsweise ein Metall, weiter vorzugsweise einen Stahl und insbesondere einen Edelstahl.

Der Erfindung liegt hier die Erkenntnis zugrunde, dass eine massive Welle ohne axiale Durchgangsbohrung für eine Achse nur axial abschnittsweise an einem Außendrehlager gelagert werden kann. Denn andere axiale Abschnitte der massiven Welle müssen andere Aufgaben wahrnehmen und sind insbesondere dem Rotorblock bzw. dem Pumpenrad zugeordnet. In der Folge ist die axiale Länge des Außendrehlagers einer massiven Welle relativ kurz im Vergleich zur Gesamtlänge der Welle.

Im Falle einer Achse hingegen können sich der Rotorblock und das Drehlager bzw. Innendrehlager über einen längeren Abschnitt hinweg in axialer Richtung überlappen, so dass die bei einem System mit einer Achse eine - relativ gesehen - größere Drehlagerlänge erreicht werden kann. Hierdurch läuft der Rotor bei einem Achssystem insgesamt ruhiger, was zu einem geringeren Verschleiß, einer größeren Lebensdauer und im Ergebnis zu einer leistungsfähigeren Pumpe führt. Im Ergebnis wird hierdurch die eingangs genannte Aufgabe gelöst.

Die Rotationssachse A definiert eine axiale, eine radiale sowie eine tangentiale Richtung bzw. Umlaufrichtung. Die Umlaufrichtung bezieht sich vorzugsweise auf die Draufsicht und damit auf die Sicht von außen in den Einlass hinein. Die Drehrichtung des Rotors verläuft zweckmäßigerweise in der Umlaufrichtung im Uhrzeigersinn. Der Ausdruck "axial einwärts" bezieht sich vorzugsweise auf die Strömungsrichtung des Fluids im Einlass. Die Strömungsrichtung des Fluids im Einlass kurz vor dem Pumpenrad bzw. der Spinne ist vorzugsweise von "oben" nach "unten" gerichtet. Folglich entspricht der Ausdruck "axial einwärts" dem Ausdruck "von oben nach unten".

Der Rotorblock umfasst vorzugsweise einen Rotorkern. Bevorzugt weist der Rotorblock Magnete und insbesondere Permanentmagnete auf. Zweckmäßigerweise ist der Rotorblock bzw. der Rotorkern in einem Querschnitt etwa ringförmig ausgebildet. Vorzugsweise sind die Magnete an einer radialen Außenseite des Rotorkerns befestigt. Es ist sehr bevorzugt, dass der Rotorkern eine Mehrzahl von übereinander gestapelten Rotorblechen aufweist. Die Rotorbleche sind vorzugsweise Elektrobleche. Die Rotorbleche können mittels Stanzpaketieren oder mittels Backlack miteinander zu den Rotorkern verbunden sein. Es ist von Vorteil, dass die Rotorbleche mit einer isolierenden Beschichtung versehen sind.

Der Rotorblock und das Blockgehäuse bilden in axialer Richtung zweckmäßigerweise einen Antriebsabschnitt des Rotors. Vorzugsweise umfasst der Rotor in axialer Richtung zwischen dem Antriebsabschnitt und dem Pumpenrad einen Verbindungsabschnitt. Zweckmäßigerweise bilden der Antriebsabschnitt und der Verbindungsabschnitt des Rotors bzw. des Rotorkörpers die Welle. Es ist bevorzugt, dass das Blockgehäuse bzw. der Antriebsabschnitt die Antriebskammer in einen oberen Hohlraum oberhalb des Blockgehäuses und mit Vorteil in einen unteren Hohlraum unterhalb des Blockgehäuses unterteilt.

Es ist möglich, dass das Drehlager mit seiner radialen Innenseite oder seiner radialen Außenseite einer rotatorischen Gleitbewegung ausgesetzt ist. Das Drehlager kann aus demselben Material wie der Rotorkörper und insbesondere integraler Bestandteil des Rotorkörpers sein. Das Drehlager kann aus einem anderen Material als der Rotorkörper gebildet sein.

Vorzugsweise umfasst das Gehäuse ein oberes Gehäuseteil und ein unteres Gehäuseteil. Die Platine ist - insbesondere in axialer Richtung - bevorzugt zwischen der Trennwand und dem unteren Gehäuseteil angeordnet. Der Stator ist - insbesondere in radialer Richtung - bevorzugt zwischen der Trennwand und dem unteren Gehäuseteil angeordnet. Der Rotor ist - insbesondere in axialer Richtung - mit Vorteil zwischen dem oberen Gehäuseteil und der Trennwand befindlich.

Die Trennwand umfasst vorzugsweise einen Boden, eine Seitenwand, einen Kragen und/oder einen Trennwandflansch. Das obere Gehäuseteil weist bevorzugt einen oberen Gehäuseflansch auf. Das untere Gehäuseteil umfasst mit Vorteil einen unteren Gehäuseflansch. Die Pumpe umfasst vorteilhafterweise einen Statorhalter. Der Stator und der Statorhalter bilden bevorzugt ein Statoraggregat. Der Statorhalter weist mit Vorteil einen Halterflansch auf.

Der Einlass ist besonders bevorzugt koaxial zum Rotor ausgebildet. Dies bedingt geringe Druckverluste am Pumpenrad. Vorzugsweise ist ein umlaufend um das Pumpenrad angeordneter Sammelkanal zum Einsammeln des nach radial außen geschleuderten Fluids angeordnet. Es ist bevorzugt, dass der Sammelkanal im Uhrzeigersinn eine lichte, sich vergrößernde Querschnittsfläche aufweist. Dies bewirkt, dass entlang des Sammelkanals ein konstanter Druck bereitgestellt wird, wodurch zugleich auch ein relativ konstantes Druckgefälle entlang des Sammelkanals nach radial innen erzeugt wird. Der Auslass ist vorzugsweise als tangentiale Verlängerung des Umlaufkanals ausgebildet. Hierdurch werden geringe Druckverluste erreicht.

Gemäß einer besonders bevorzugten Ausführungsform weist der Rotor in einem Längsschnitt der Pumpe einen Vorsprung zur Turbulenzverringerung auf, wobei der Vorsprung in radialer Richtung vorspringt und mit Blickrichtung auf eine Unterseite des Rotors einen Eingang eines Rückführkanals und vorzugsweise alle Eingänge der Rückführkanäle wenigstens teilweise und vorzugsweise vollständig verdeckt. Dies bewirkt eine Abschirmung des Rückführkanals bzw. der Rückführkanäle und der Trennelemente von dem/einem unteren Hohlraum, sodass diese turbulenzerzeugenden Elemente nur einen geringen Einfluss auf die Fluidmenge im unteren Hohlraum haben. Hierdurch wird der Rotor bzw. die Pumpe insgesamt leichtgängiger und der Stromverbrauch der Pumpe verringert. Vorzugsweise zwingt der Vorsprung das Fluid im Bereich des Eingangs des Rückführkanals bzw. der Eingänge der Rückführkanäle dazu, von einer rein axialen Strömungsrichtung abzuweichen. Mit Vorteil verändert der Vorsprung den Eingang des Rückführkanals bzw. die Eingänge der Rückführkanäle so, dass eine Flächennormale der fluidisch aktiven bzw. lichten Fläche des Eingangs von einer rein axialen Ausdehnung abweicht. Ganz besonders vorzugsweise verläuft die Flächennormale des Eingangs in den Rückführkanal in einer radialen bzw. rein radialen Richtung und insbesondere in eine auswärtige radiale Richtung bzw. eine rein radiale, auswärtige Richtung.

Es ist sehr bevorzugt, dass der Rotor eine Rotorkappe aufweist, wobei die Rotorkappe an einem unteren Ende des Rotors befestigt ist. Die Rotorkappe kann beispielsweise mittels Ultraschallschweißen an dem Rotor bzw. Rotorkörper befestigt sein. Es ist besonders bevorzugt, dass die Rotorkappe den Vorsprung zur Turbulenzverringerung aufweist. Dies bewirkt eine spritzgusstechnische Vereinfachung des Rotorkörpers.

Es ist von großem Vorteil, wenn der Rotorkörper einstückig und vorzugsweise integral - insbesondere mittels Spritzguss bzw. Umspritzung - ausgebildet ist. Die Einstückigkeit bewirkt eine relativ große Stabilität, was mit Blick auf die Lebensdauer und die damit einhergehende große Gesamtzahl an Umdrehungen von Bedeutung ist. Ein integraler Aufbau des Rotorkörpers in Form eines Spritzgusses bzw. einer Umspritzung bewirkt, dass die Zahl der Teile und der Verbindungsschritte deutlich verringert und so der Herstellungsaufwand klein gehalten wird.

Das Pumpenrad umfasst vorzugsweise einen Radteller und/oder Schaufeln zur Führung des Fluids. Die Schaufeln sind bevorzugt einstückig und insbesondere integral mit dem Radteller verbunden. Vorzugsweise umfasst der Rotorkörper den Radteller und/oder die Schaufeln. Die Schaufeln bilden zwischen sich zweckmäßigerweise Schaufelkanäle. Der Rotor bzw. der Rotorkörper bzw. das Pumpenrad weist vorzugsweise fünf und besonders vorzugsweise sieben Schaufeln bzw. Schaufelkanäle auf.

Der Rotor umfasst mit Vorteil einen Raddeckel. Der Raddeckel und der Rotorkörper bzw. die Schaufeln sind zweckmäßigerweise zusammengesteckt und/oder miteinander verschweißt. Der Raddeckel dient zweckmäßigerweise einem Abschluss des Pumpenrads nach oben hin, sodass nicht die Schaufeln, sondern nur eine Oberseite des Raddeckels in Berührung mit dem oberen Gehäuseteil kommen kann. Hierdurch wird ein Verschleiß der Schaufeln praktisch ausgeschlossen, wodurch die Lebensdauer der Pumpe verlängert wird.

Es ist ganz besonders bevorzugt, dass der Rotorkörper bzw. das Blockgehäuse den Rotorblock in radialer Richtung wenigstens entlang eines axialen Abschnitts und wenigstens entlang eines Umlaufabschnitts umschließt. Vorzugsweise umschließt der Rotorkörper bzw. das Blockgehäuse den Rotorblock in radialer Richtung entlang der gesamten axialen Ausdehnung des Rotorblocks und/oder entlang eines gesamten Umlaufs des Rotorblocks. Hierdurch werden die metallischen Komponenten des Rotorblocks vom Fluid abgeschirmt. Außerdem dient das Umschließen des Rotorblocks durch den Rotorkörper bzw. das Blockgehäuse einem Glätten der Außenseite des Rotorblocks, sodass die metallischen Teile des Rotorblocks die Trennwand nicht verletzen können. Und schließlich bewirkt die Umschließung des Rotorblocks, dass eine besonders glatte, radiale Außenseite des Antriebsabschnitts des Rotors erzeugt wird, wodurch die Turbulenzerzeugung durch den Antriebsabschnitt auf ein Minimum verringert wird.

Gemäß einer sehr bevorzugten Ausführungsform ist die Platine an einer Außenseite der Trennwand angeordnet. Vorzugsweise umfasst die Platine elektronische Steuereinheiten, beispielsweise Transistoren und insbesondere MOSFETs. Es ist von Vorteil, dass die Platine an einen/dem Boden der Trennwand angeordnet ist. Es ist sehr bevorzugt, dass ein Wärmeleitelement zwischen der Platine und der Trennwand befindlich ist. Das Wärmeleitelement umfasst mit Vorteil eine Wärmeleitpaste. Vorzugsweise berühren die elektronischen Steuereinheiten die Wärmeleitpaste bzw. das Wärmeleitelement. Hierdurch wird eine besonders günstige Abfuhr der an der Platine anfallenden Wärme gewährleistet. Es ist bevorzugt, dass die Platine eine elektrische Verbindung zur Verbindung mit dem Stator aufweist. Vorzugsweise wird die elektrische Verbindung durch ein Stützelement mechanisch unterstützt. Folglich wird die Platine in mechanischer Hinsicht nicht nur über die elektrische Verbindung mit dem Stator, sondern auch über das Stützelement mechanisch gehalten. Es ist bevorzugt, dass die Platine ein zweites Stützelement umfasst. Das zweite Stützelement ist bezüglich der Rotationssachse A in einem Bereich der Platine angeordnet, welcher einem Bereich des ersten Stützelements auf der Platine gegenüberliegt. Das zweite Stützelement verbindet die Platine zweckmäßigerweise mit dem Stator bzw. dem Statorhalter bzw. dem Statoraggregat.

Es ist von Vorteil, wenn die Rückführkanäle innerhalb des Rotors bzw. Rotorkörpers befindlich sind. Vorteilhafterweise umschließt der Rotor bzw. der Rotorkörper wenigstens axial abschnittsweise wenigstens einen Rückführkanal und vorzugsweise alle Rückführkanäle in einem Querschnitt vollständig. Das jeweilige vollständige Umschließen des Rückführkanals bzw. der Rückführkanäle durch den Rotorkörper bewirkt, dass die Grenzflächen innerhalb des Rotors (z.B. zwischen Rotorkörper und Rotorblock oder zwischen Rotorkörper und Drehlager) besonders gleichmäßig ausgebildet sind. Hierdurch entstehen weniger Kanten, sodass der Rotor an Stabilität gewinnt und insbesondere verschleißärmer wird. Dies gilt in ganz besonderem Maße für Grenzflächen, die während des Pumpenbetriebs übereinander hinweggleiten. Dies gilt aber auch für Grenzflächen innerhalb des Rotors, welche nicht übereinander hinweggleiten. Sind dort Nuten befindlich, so führen diese Nuten häufig zu Kanten oder insgesamt zu unerwünschten Artefakten, sodass beispielsweise das Strömungsverhalten des Fluids in den Rückführkanälen beeinträchtigt werden kann.

Gemäß einer besonders bevorzugten Ausführungsform weist das Drehlager eine effektive axiale Drehlagerlänge DL auf, wobei die Achse eine effektive Achslänge AL aufweist. Es ist bevorzugt, dass das Verhältnis DL/AL größer oder gleich 0, 40 bzw. 0,45 bzw. 0,50 bzw. 0,55 bzw. 0,60 bzw. 0,65 bzw. 0,70 ist. Der Begriff "effektive axiale Drehlagerlänge" meint vorzugsweise diejenige axiale Länge derjenigen Fläche des Drehlagers, welche in Kontakt mit der Achse steht. Der Ausdruck "effektive Achslänge" meint bevorzugt diejenige axiale Länge der Achse, mit welcher die Achse aus dem Boden der Trennwand hervorsteht und welche gleichzeitig eine Kontaktfläche für das Drehlager bzw. die Achshalterung bereitstellt. Beispielsweise trägt eine Fase an einem oberen Ende der Achse nicht zur effektiven Achslänge AL bei. Insbesondere der axiale Abschnitt der Achse, welcher von der Trennwand bzw. vom Boden der Trennwand umschlossen ist, trägt nicht zur effektiven Achslänge bei. Ein möglichst großes Verhältnis DL/AL bewirkt, dass der Verschleiß minimiert wird, weil die auf das Drehlager und die Achse einwirkenden Kräfte auf eine sehr große Fläche bzw. ein sehr lang ausgedehntes Drehlager verteilt werden.

Es ist ganz besonders bevorzugt, dass die Pumpe eine Achshalterung aufweist. Es ist von Vorteil, dass die Achshalterung in einer oberen Hälfte bzw. einem oberen Drittel bzw. einem oberen Viertel der Achse angeordnet ist. Die Achshalterung umfasst vorzugsweise ein Metall, weiter vorzugsweise einen Stahl und insbesondere einen Edelstahl. Es ist sehr bevorzugt, dass die Achshalterung die Achse in Umlaufrichtung wenigstens teilweise und vorzugsweise vollständig umschließt. Es ist bevorzugt, dass die Achse - wenigstens in einem teilweise demontierten Zustand der Pumpe - in der Achshalterung in axialer Richtung gleiten kann und mit Vorteil gleichzeitig kein radiales Spiel in der Achshalterung zur Verfügung hat.

Die Achshalterung weist eine effektive axiale Halterlänge HL auf. Der Begriff "effektive axiale Halterlänge" meint vorzugsweise diejenige axiale Länge der Achshalterung, entlang welcher die Achshalterung in Kontakt mit der Achse steht. Insbesondere eine Fase auf einer radialen Innenseite der Achshalterung trägt nicht zur effektiven axialen Halterlänge HL bei. Es ist ganz besonders bevorzugt, dass ein Verhältnis HL/AL wenigstens 0,07 bzw. 0,10 bzw. 0,13 bzw. 0,15 bzw. 0,17 beträgt. Dies bewirkt eine besonders stabile Halterung der Achse an ihrem oberen Ende, wodurch eine größere Laufruhe und ein geringerer Verschleiß erreicht werden.

Ist sehr von Vorteil, wenn ein Verhältnis (DL + HL)/AL sich auf wenigstens 0,5 bzw. 0,6 bzw. 0,7 bzw. 0,8 bzw. 0,9 beläuft. Dies bewirkt, dass möglichst wenig effektive Achslänge ungenutzt verbleibt. Es ist eine Erkenntnis dieser Erfindung, dass die von der Achse zur Verfügung gestellte effektive Achslänge AL größtmöglich auszunutzen ist und insbesondere für ein axial möglichst ausgedehntes Drehlager sowie für eine axial möglichst ausgedehnte Axialhalterung verwendet werden sollte. Ein Verhältnis von DL/HL beläuft sich mit Vorteil auf 1 bis 10, vorzugsweise auf 2 bis 7 und weiter vorzugsweise auf 2,5 bis 5 und ganz besonders vorzugsweise auf 3 bis 4.

Es ist von Vorteil, wenn der Rotor in einen Stillstand der Pumpe bzw. in einen Zustand ohne Fluid etwas axiales Spiel auf der Achse zur Verfügung hat. Es ist möglich, dass der Rotor in einem Zustand mit stehendem Fluid oder in einem Zustand ohne Fluid nicht an der Achshalterung anliegt. Es ist sehr bevorzugt, dass die Pumpe so ausgebildet ist, dass im Pumpenbetrieb der Rotor bzw. der Rotorkörper bzw. das Drehlager mit einer oberen axialen Stirnfläche an einer unteren axialen Stirnfläche der Achshalterung anliegt. Zweckmäßigerweise sind die obere, axiale Stirnfläche des Drehlagers und die untere, axiale Stirnfläche der Achshalterung zueinander einer Gleitreibung ausgesetzt. Es ist sehr bevorzugt, dass die obere axiale Stirnfläche des Drehlagers hinsichtlich ihrer Flächenausdehnung identisch ist mit der Flächenausdehnung der unteren axialen Stirnfläche der Achshalterung. Das axiale Spiel erlaubt - je nach Drehzahl und damit je nach erzeugtem Druck - unterschiedlich stark ausgeprägte Sekundärströme. Bei hohem Druck im Sammelkanal wird durch einen entsprechend starken Sekundärstrom auch ein größerer Druck in der Antriebskammer erzeugt, welcher den Rotor bis maximal zum Anschlag an der Achshalterung anhebt. Hierdurch wird die Kühlung der elektrischen Komponenten je nach Pumpleistung angepasst.

Es ist bevorzugt, dass eine radiale Ausdehnung der oberen axialen Stirnfläche des Drehlagers größer ist als eine radiale Ausdehnung des Drehlagers in einem unteren Bereich. Vorzugsweise umfasst das Drehlager in einer oberen Hälfte bzw. einem oberen Drittel bzw. Viertel einen Flansch. Dies erlaubt einen guten Formschluss mit dem Rotorkörper und erhöht die Stabilität des Rotors.

Es ist sehr bevorzugt, dass das Drehlager entlang wenigstens eines axialen Abschnitts über einen vollen Umfang an der Achse anliegt bzw. nutenfrei ist. Hierdurch wird das Drehlager besonders stabil ausgebildet, anstatt zusätzlich noch an seiner Innenseite die Aufgabe der Fluidführung übernehmen zu müssen.

Vorzugsweise umfasst das Drehlager ein anderes Material als der Rotorkörper bzw. die Welle bzw. das Pumpenrad. Das Drehlager umfasst mit Vorteil Kohlenstoff und insbesondere ein Graphit. Das Drehlager weist bevorzugt ein Bindemittel und insbesondere ein Polymer auf. Es ist von Vorteil, dass das Drehlager nicht integral mit dem Pumpenrad verbunden ist bzw. nicht integraler Bestandteil des Rotorkörpers ist. Hierdurch wird erreicht, dass dem Rotor über das Drehlager mit einem für die Gleitreibung optimierten Material einerseits eine gute Gleiteigenschaft zur Verfügung gestellt wird. Gleichzeitig ist das Material des Rotorkörpers für die Kraftübertragung und insbesondere für die Übertragung von Torsionskräften optimiert, sodass für den Rotorkörper bzw. die Welle andere Materialien als für das Drehlager in Betracht kommen. Der Rotorkörper weist mit Vorteil einen Thermoplast, vorzugsweise einen technischen Thermoplast, weiter vorzugsweise einen Hochleistungsthermoplast und beispielsweise ein Polyphenylensulfid (PPS) auf.

Mit Vorteil ist in Strömungsrichtung zwischen dem Einlass und dem Pumpenrad eine Spinne angeordnet. Die Spinne ist vorzugsweise an dem Gehäuse bzw. dem oberen Gehäuseteil befestigt. Die Spinne weist bevorzugt wenigstens zwei und weiter vorzugsweise wenigstens drei Beine auf. Ganz besonders vorzugsweise umfasst die Spinne genau drei Beine. Die Beine der Spinne sind vorzugsweise an einer Innenseite des Einlasses angeordnet bzw. befestigt. Es ist von Vorteil, dass die Spinne einstückig und vorzugsweise integral mit dem Einlass bzw. mit dem oberen Gehäuseteil bzw. mit dem Gehäuse verbunden ist. Die Spinne umfasst zweckmäßigerweise an ihrer Unterseite eine Aufnahme zum Einsetzen der Achshalterung. Vorzugsweise ist die Achshalterung in die Aufnahme der Spinne eingepresst. Die Spinne bewirkt, dass hierdurch eine relativ turbulenzarme Befestigung der Achshalterung an dem Gehäuse ermöglicht wird.

Gemäß einer bevorzugten Ausführungsform verläuft zwischen einer radialen Außenseite des Antriebsabschnitts bzw. des Blockgehäuses und einer Innenseite der Trennwand bzw. der Innenseite der Seitenwand der Trennwand ein Ringspalt. Der Sekundärstrompfad weist mit Vorteil den Ringspalt auf.

Vorzugsweise verbindet der Ringspalt einen/den oberen Hohlraum der Antriebskammer mit einen/dem unteren Hohlraum der Antriebskammer fluidisch. Dies bewirkt, dass das Fluid die Innenseite des Stators sowie die Außenseite des Rotorblocks kühlt.

Es ist bevorzugt, dass das Pumpenrad bzw. der Radteller und der Sammelkanal bzw. die Trennwand bzw. der Kragen der Trennwand einen umlaufenden Spalt bilden, der den Sammelkanal bzw. die Radkammer mit der Antriebskammer bzw. dem oberen Hohlraum der Antriebskammer fluidisch verbindet. Der umlaufende Spalt ermöglicht aufgrund des nahezu vollständigen Umlaufs den Durchtritt einer relevanten Flüssigkeitsmenge, sodass der Stator, der Rotorblock und die Platine ausreichend gekühlt werden. Gleichzeitig ermöglicht der umlaufende Spalt die Vermeidung von Turbulenzen. Gäbe es beispielsweise eine Mehrzahl von definierten Kanälen vom Sammelkanal in den oberen Hohlraum, so würden die jeweiligen Eingänge und Ausgänge jeweils Turbulenzen erzeugen. In der Folge ist der umlaufende Spalt insgesamt in fluiddynamischer Hinsicht etwas günstiger im Vergleich zu einzelnen Kanälen.

Gemäß einer besonders bevorzugten Ausführungsform umfasst die Trennwand - vorzugsweise in einem unteren Bereich der Antriebskammer - auf ihrer Innenseite Rippen. Zweckmäßigerweise sind auf einer Innenseite des Bodens der Trennwand Rippen angeordnet. Dies bewirkt eine Verstärkung des Bodens bzw. der Trennwand und dadurch eine Verbesserung der Achsstabilität. Dies wiederum begünstigt die Laufruhe der Pumpe und verringert den Verschleiß. Darüber hinaus sind die Rippen gegenüber einer massiven Ausgestaltung des Bodens von Vorteil, da die dickwandigen Bereiche leicht zu Fehlstellen beim Spritzguss führen können. Hierzu gehören insbesondere Lunker sowie Materialschrumpfung. Die Rippen verlaufen vorzugsweise mit ihrer Längsausdehnung in radialer Richtung.

Mit Vorteil umfasst die Trennwand bzw. der Boden der Trennwand auf ihrer/seiner Innenseite eine Achsfixierung. Die Achsfixierung ist zweckmäßigerweise in einem Längsschnitt in der Mitte des Bodens bzw. der Trennwand angeordnet. Vorzugsweise ist die Achsfixierung ein einstückiger und insbesondere integraler Teil des Bodens bzw. der Trennwand. Es ist ganz besonders bevorzugt, dass die Achsfixierung mittels Umspritzung der Achse hergestellt ist. Mit Vorteil umfasst die Achse in einem von der Achsfixierung umspritzten axialen Abschnitt einen asymmetrischen Bereich. Dies dient der Rotationsvermeidung der Achse in der Achsfixierung bzw. in den Boden bzw. in der Trennwand.

Gemäß einer bevorzugten Ausführungsform weist die Trennwand einen Thermoplast, vorzugsweise einen technischen Thermoplast, weiter vorzugsweise einen Hochleistungsthermoplast und besonders vorzugsweise ein Polyphenylensulfid (PPS) auf. Es ist sehr bevorzugt, dass die Trennwand einen Leitfähigkeitszusatz zur Erhöhung der thermischen Leitfähigkeit umfasst. Der Leitfähigkeitszusatz weist vorzugsweise Kohlenstoff und weiter vorzugsweise ein Graphit auf.

Vorteilhafterweise umfasst die Pumpe einen Statorhalter. Es ist bevorzugt, dass der Statorhalter einen Halterflansch aufweist. Vorzugsweise liegt der Halterflansch an einem Gehäuseflansch, insbesondere an dem oberen Gehäuseflansch und/oder dem unteren Gehäuseflansch und besonders vorzugsweise an dem unteren Gehäuseflansch an. Dies erlaubt eine sehr schnelle Montage der Pumpe, weil der Statorhalter mit dem gesamten Stator in das untere Gehäuseteil eingesetzt werden kann. Mit Vorteil liegt der Halterflansch an einem/dem Trennwandflansch an. Zweckmäßigerweise ist der Halterflansch in axialer Richtung zwischen dem Trennwandflansch und dem unteren Gehäuseflansch angeordnet. Es ist bevorzugt, dass der Trennwandflansch an dem oberen Gehäuseflansch und/oder dem Halterflansch anliegt. Vorzugsweise ist der Trennwandflansch zwischen dem oberen Gehäuseflansch und dem Halterflansch bzw. dem unteren Gehäuseflansch angeordnet. Es ist bevorzugt, dass eine Befestigungsvorrichtung - insbesondere eine Schraubvorrichtung - den oberen Gehäuseflansch, den Trennwandflansch, den Halterflansch und/oder den unteren Gehäuseflansch zusammenklemmt bzw. durchgreift. Dies ermöglicht eine schnelle Fixierung sämtlicher, größerer Komponenten der Pumpe.

Gemäß einer sehr bevorzugten Ausführungsform umfasst die Pumpe ein unteres Gehäuseteil, ein Statoraggregat, ein Trennwandaggregat und ein oberes Gehäuseteil, wobei das Statoraggregat den Stator und vorzugsweise einen/den Statorhalter aufweist, wobei das Trennwandaggregat die Trennwand und vorzugsweise eine/die Achse umfasst, wobei die Pumpe in der Reihenfolge
- unteres Gehäuseteil
- Statoraggregat
- Trennwandaggregat
- Rotor
- oberes Gehäuseteil
oder in der umgekehrten Reihenfolge zusammensetzbar ist. Dass diese beiden Reihenfolgen beim Zusammensetzen möglich sind, schließt andere Reihenfolgen nicht aus. Beispielsweise kann der Rotor auf die Achse des Trennwandaggregats gesetzt werden, um dann das Trennwandaggregat gemeinsam mit dem Rotor auf das Statoraggregat zu setzen.

Es ist von Vorteil, dass das Statoraggregat die Platine aufweist. Gemäß einer bevorzugten Ausführungsform weist das untere Gehäuseteil äußere elektrische Anschlüsse auf. Es ist sehr bevorzugt, dass die äußeren, elektrischen Anschlüsse über Kabel mit der Platine verbindbar bzw. verbunden sind. Zweckmäßigerweise werden die Kabel mit dem unteren Gehäuseteil und der Platine verbunden, bevor das Statoraggregat in das untere Gehäuseteil oder das untere Gehäuseteil auf das Statoraggregat gesetzt wird.

Nachfolgend wird die Erfindung anhand eines Ausführungsbeispiels mit Figuren näher erläutert. Es zeigen
- Figur 1: einen Längsschnitt durch eine erfindungsgemäße Pumpe,
- Figur 2: eine perspektivische Ansicht eines vergrößerten Ausschnitts aus Figur 1,
- Figur 3: eine Draufsicht auf einen Rotorkörper der Pumpe aus Figur 1 und
- Figur 4: eine Untersicht des Rotorkörpers aus Figur 1.

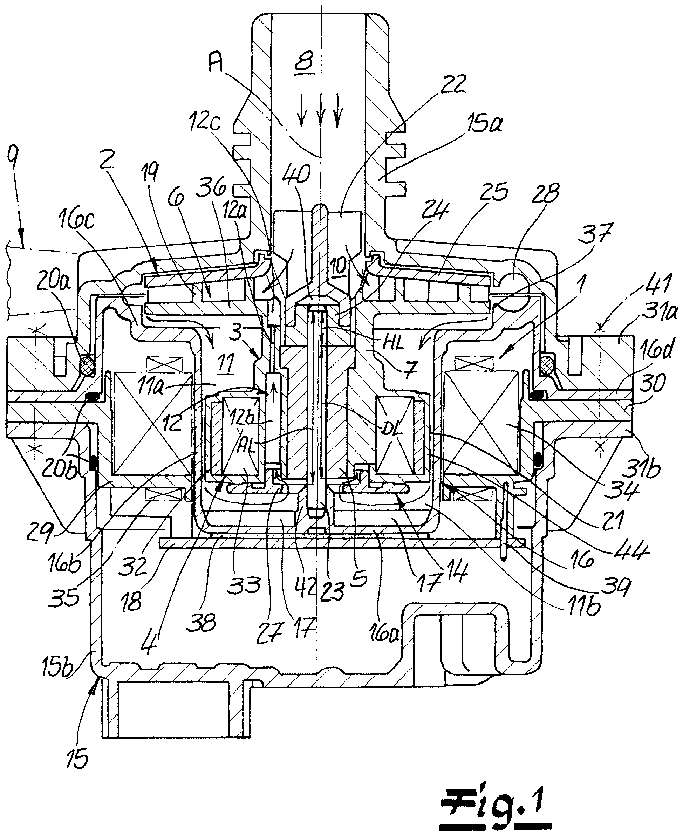

In Figur 1 ist eine Pumpe dargestellt, welche vorzugsweise in einem Fahrzeug und besonders vorzugsweise zum Temperieren einer Antriebsbatterie eines Elektrofahrzeugs verwendet wird. Insbesondere ist die Pumpe eine Temperierpumpe, welche ein Temperiermittel durch eine Fluidleitung zu einer Antriebsbatterie eines Elektrofahrzeugs treibt.

Die Pumpe umfasst zweckmäßigerweise einen Einlass 8 sowie einen in Figur 1 aufgrund des gewählten Schnitts nur gestrichelt dargestellten Auslass 9. Die Pumpe umfasst ein Pumpenrad 6, welches im Uhrzeigersinn arbeitet. Hierdurch wird das vom Anlass 8 kommende Fluid nach außen und vorteilhafterweise in einen umlaufenden Sammelkanal 28 geschleudert. Es bevorzugt, dass ein lichter Querschnitt des Sammelkanals 28 sich im Uhrzeigersinn bis zum Auslass 9 vergrößert, um den Druck im Sammelkanal 28 entlang seines vorzugsweise nahezu vollständigen Umlaufs etwa konstant zu halten. Der Weg des Fluids vom Einlass 8 bis zum Auslass 9 über das Pumpenrad 6 und den Sammelkanal 28 ist der von der Pumpe bereitgestellte Hauptstrompfad für das Fluid. Das Pumpenrad 6 dieses Ausführungsbeispiels umfasst insgesamt sieben Schaufeln 19, welche das Fluid nach radial außen schleudern.

Die Pumpe wird elektrisch angetrieben, wozu die Pumpe einen Stator 1 und einen Rotor 2 umfasst. Zweckmäßigerweise ist der Rotor 2 innerhalb des Stators 1 angeordnet. Der Stator 1 mag einen vereinfacht dargestellten Statorkern 34 sowie vereinfacht dargestellte Statorwicklungen 35 umfassen. Der Statorkern 34 kann als umlaufender Ring mit mehreren Polschuhen in bekannter Weise ausgebildet sein. Es ist möglich, dass der Statorkern 34 aus einem Stapel Statorbleche gebildet ist. Vorzugsweise ist der Stator 1 auf bzw. an einem Statorhalter 29 angeordnet. Zweckmäßigerweise umfasst die Pumpe ein Gehäuse 15. Das Gehäuse 15 weist in diesem Ausführungsbeispiel ein oberes Gehäuseteil 15a und ein unteres Gehäuseteil 15b auf.

Der Rotor 2 umfasst einen Rotorkörper 3, einen Rotorblock 4, ein Drehlager 5 und/oder ein Pumpenrad 6. Der Rotor 2 ist vorzugsweise auf einer rotatorisch feststehenden Achse 23 drehbar um eine Rotationssachse A gelagert. Die Achse 23 umfasst vorzugsweise ein Metall, weiter vorzugsweise einen Stahl und insbesondere einen Edelstahl. Es ist bevorzugt, dass die Achse 23 sich an ihrem oberen Ende über eine Fase verjüngt.

Der Rotor 2 dieses Ausführungsbeispiels umfasst einen Raddeckel 25, welcher das Pumpenrad 6 zum Einlass 8 hin bzw. nach oben hin abschließt bzw. abdeckt. Der Raddeckel 25 kann eine zentrische Öffnung aufweisen. Das Pumpenrad 6 befindet sich zweckmäßigerweise innerhalb einer von dem Gehäuse 15 gebildeten Radkammer 10. Es ist sehr bevorzugt, dass der Rotor 2 bzw. der Rotorkörper 3 bzw. das Pumpenrad 6 mehrere und vorzugsweise sieben Schaufeln 19 und/oder einen Radteller 36 umfasst.

Der Rotorblock 4 dieses Ausführungsbeispiels umfasst einen Rotorkern 33 und zweckmäßigerweise Magnete 32. Die Magnete 32 können quaderförmig oder leicht gebogen ausgeführt sein und sind mit Vorteil an einer radialen Außenseite des Rotorkerns 33 angeordnet.

Der Rotor 2 bzw. der Rotorkörper 3 umfasst vorzugsweise ein Blockgehäuse 44, welches den Rotorblock 4 wenigstens teilweise und in diesem Ausführungsbeispiel vollständig einhaust. Der Rotorkörper 3 bzw. das Blockgehäuse 44 umfasst mit Vorteil einen Kunststoff und ist vorzugsweise mittels Umspritzung des Rotorblocks 4 und/oder des Drehlagers 5 hergestellt.

Der der Rotor 2 bzw. Rotorkörper 3 weist mit Vorteil eine Welle 7 auf. Es ist bevorzugt, dass die Welle 7 in axialer Richtung einen Antriebsabschnitt und/oder einen Verbindungsabschnitt umfasst. Vorteilhafterweise umfasst der Antriebsabschnitt das Blockgehäuse 44. Es ist bevorzugt, dass der Verbindungsabschnitt in axialer Richtung zwischen dem Antriebsabschnitt bzw. Blockgehäuse 44 und dem Pumpenrad 6 bzw. dem Radteller 36 angeordnet ist.

Die Pumpe weist bevorzugt eine Trennwand 16 auf. Die Trennwand 16 umfasst vorzugsweise einen Kunststoff, insbesondere einen technischen Kunststoff, weiter vorzugsweise einen Hochleistungskunststoff und insbesondere Polyphenylensulfid (PPS). Mit Vorteil weist die Trennwand 16 einen Leitfähigkeitszusatz zur Erhöhung der thermischen Leitfähigkeit auf. Der Leitfähigkeitszusatz kann insbesondere ein Kunststoff, vorzugsweise Graphit, umfassen. Es ist von Vorteil, dass die Trennwand 16 einstückig und insbesondere integral ausgebildet ist. Die Trennwand 16 weist bevorzugt einen Boden 16a, eine Seitenwand 16b einen Kragen 16c und/oder einen Trennwandflansch 16d auf.

Die Trennwand 16 bzw. der Boden 16a umfasst vorzugsweise eine Achsfixierung 42. Die Achsfixierung ist mit Vorteil einstückig und insbesondere integral mit dem Boden 16a bzw. der Trennwand 16 verbunden. Bevorzugt ist die Achse 23 in der Trennwand bzw. im Boden 16a - insbesondere mit der Achsfixierung 42 - fixiert. Die Achsfixierung 42 ist vorteilhafterweise mittels Umspritzung um einen unteren Endbereich der Achse 23 hergestellt. Der Boden 16a umfasst in diesem Ausführungsbeispiel mehrere Rippen 17, welche den Boden 16a bzw. die Achsfixierung 42 verstärken.

Die Seitenwand 16b bzw. die Trennwand dieses Ausführungsbeispiels ist zweckmäßigerweise hohlzylindrisch ausgebildet und mag in radialer Richtung eine Antriebskammer 11 definieren. Die Antriebskammer mit in axialer Richtung vorzugsweise von dem Boden 16a bzw. dem Pumpenrad 6 bzw. dem Radteller 36 begrenzt. Innerhalb der Antriebskammer 11 ist vorzugsweise der Rotor 2 bzw. der Rotorblock 4 befindlich. Mit Vorteil ist in axialer Richtung zwischen dem Blockgehäuse 44 und dem Pumpenrad bzw. Radteller 36 ein oberer Hohlraum befindlich. Zweckmäßigerweise ist in axialer Richtung zwischen dem Blockgehäuse 44 und dem Boden 16a ein unterer Hohlraum befindlich. Zwischen der Seitenwand 16b und dem Blockgehäuse 44 bzw. dem Antriebsabschnitt der Welle 7 bzw. des Rotors 2 ist vorzugsweise ein Ringspalt 21 angeordnet.

Der Kragen 16c kann insbesondere einen Teil der Radkammer 10 und/oder einen Teil des Sammelkanals 28 - vorzugsweise gemeinsam mit dem oberen Gehäuseteil 15a - definieren. Der Kragen 16c ist vorzugsweise in einer oberen Hälfte der Trennwand befindlich. Der Trennwandflansch 16d ist vorzugsweise gegenüber dem Kragen 16c nach unten hin abgesetzt.

Die Trennwand 16 trennt zweckmäßigerweise einen bzw. den Raum innerhalb des Gehäuses 15 in einen Nassbereich und einen Trockenbereich. Mit Vorteil entspricht der Nassbereich dem vom oberen Gehäuseteil 15a und der Trennwand 16 gebildeten inneren Volumen. Vorzugsweise entspricht der Trockenbereich einem von der Trennwand 16 und dem unteren Gehäuseteil 15b gebildeten inneren Volumen. Es ist bevorzugt, dass eine Fluiddichtung 20a zwischen dem oberen Gehäuseteil 15a und der Trennwand 16 angeordnet ist. In diesem Ausführungsbeispiel umschließt die Fluiddichtung 20a die Trennwand 16 in radialer Richtung.

Zweckmäßigerweise umfasst die Pumpe eine Platine 18 zur Steuerung des Pumpenbetriebs. Die Platine 18 ist mit Vorteil im Trockenbereich der Pumpe befindlich. Es ist bevorzugt, dass die Platine 18 in Kontakt mit einem Wärmeleitelement 38 ist. Das Wärmeleitelement 38 kann beispielsweise eine Wärmeleitpaste sein. Vorzugsweise ist das Wärmeleitelement 38 in Kontakt mit einer Außenseite der Trennwand 16 bzw. des Bodens 16a.

Es ist möglich, dass die Platine eine elektrische Verbindung 39 mit dem Stator 1 aufweist. Es ist möglich, dass die Platine 18 in einem der elektrischen Verbindung 39 radial gegenüberliegenden Bereich an einem (?) dem Statorhalter befestigt ist. Es bevorzugt, dass sich elektrische Anschlüsse (nicht dargestellt) an dem unteren Gehäuseteil 15b befinden. Die Platine 18 kann insbesondere elektronische Steuerelemente - beispielsweise MOSFET - aufweisen, welche einen nennenswerten Teil der Wärmeerzeugung der Platine 18 verursachen.

Vorzugsweise bilden der Sammelkanal 28 bzw. die Trennwand 16 bzw. der Kragen 16c und der Rotor 2 bzw. das Pumpenrad 6 bzw. der Radteller 36 einen umlaufenden Spalt 37. Es ist bevorzugt, dass durch diesen umlaufenden Spalt 37 ein Sekundärstrom des Fluids vom Hauptstrom des Fluids abzweigt. Der Sekundärstrom folgt zweckmäßigerweise einem von der Pumpe vorgegebenen Sekundärstrompfad. Der Sekundärstrom bildet sich aufgrund einer Druckdifferenz zwischen radial weiter außen liegenden Bereichen und radiale weiter innenliegenden Bereichen. Der Sekundärstrom fließt zunächst in den oberen Hohlraum 11a und danach vorzugsweise durch den Ringspalt 21. Im weiteren Verlauf erreicht der Sekundärstrom dann mit Vorteil den unteren Hohlraum 11b.

Besonders vorzugsweise umfasst der Rotor 2 bzw. Rotorkörper 3 für den Sekundärstrom wenigstens einen Rückführkanal 12 und bevorzugt mehrere Rückführkanäle 12, der/die eine fluidische Verbindung zwischen der Antriebskammer 11 und der Radkammer 10 herstellt/en. Zweckmäßigerweise sind die Rückführkanäle 12 über Trennelemente 13 des Rotors 2 bzw. Rotorkörpers 3 voneinander getrennt. Die Rückführkanäle 12 umfassen vorzugsweise einen unteren Abschnitt 12b, einen oberen Abschnitt 12a sowie einen Ausgang 12c. Mit Vorteil ist die Querschnittsfläche des unteren Abschnitts 12b größer als diejenige des oberen Abschnitts 12a.

Vom unteren Hohlraum 11b fließt der Sekundärstrom durch die Rückführkanäle 12 durch den Rotor 2 bzw. den Rotorkörper 3 nach oben zurück in die Radkammer 10. Am Ausgang 12c des Rückführkanals 12 herrscht ein geringerer Druck im Vergleich zum Druck innerhalb des Sammelkanals 28, wodurch sich der Sekundärstrom bildet. Der Sekundärstrom nimmt die Wärme des Stators 1, der Platine 18 und des Rotorblocks 4 mit und vermischt sich in einem radial inneren Bereich der Radkammer 10 mit dem Hauptstrom.

Vorzugsweise überlappt sich der untere Abschnitt 12b der Rückführkanäle 12 wenigstens teilweise in axialer Richtung mit dem Rotorblock 4. Hierdurch ist eine Wand zwischen dem Rotorblock 4 und dem unteren Abschnitt des Rückführkanals 12 relativ dünn, wodurch die Wärme gut abtransportiert werden kann.

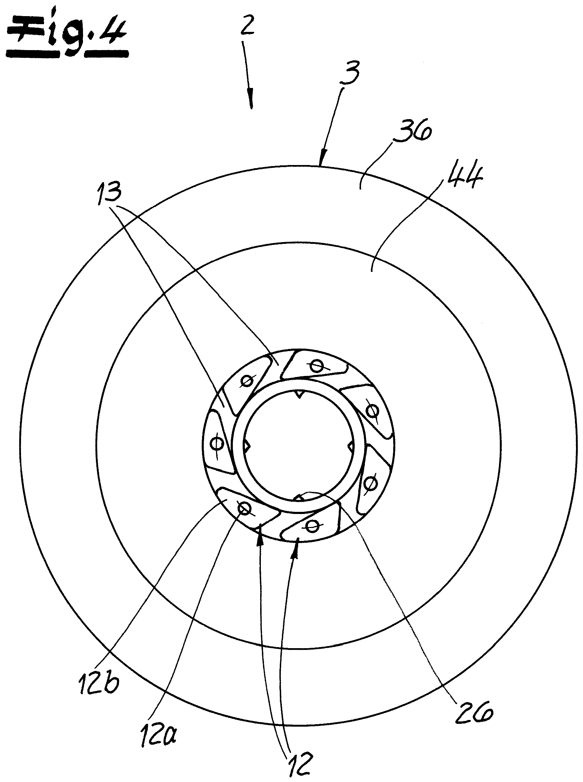

Vorzugsweise entlang des unteren Abschnitts 12b der Rückführkanäle 12 werden die Rückführkanäle 12 durch Trennelemente 13 voneinander getrennt. Die Trennelemente 13 sind insbesondere in Figur 4 erkennbar und können insbesondere als Stege oder Rippen ausgebildet sein. Die Trennelemente 13 verbinden zweckmäßigerweise die Wand des Rotorkörpers 3 zwischen dem Rotorblock 4 und dem Rückführkanal 12 einerseits mit einer Wand des Rotorkörpers 3 andererseits, die das Drehlager 5 unmittelbar umschließt. Auf diese Weise stabilisieren die Trennelemente 13 eine/die Welle 7 des Rotors 2 bzw. des Rotorkörpers 3. Gleichzeitig verursachen insbesondere die Trennelemente 13 erhebliche Turbulenzen in der unteren Hohlkammer 11b, wodurch Verluste entstehen.

Es ist sehr bevorzugt, dass der Rotor 2 einen Vorsprung 27 aufweist, welcher in radialer Richtung - vorzugsweise radial einwärts - vorspringt und mit Blickrichtung auf eine Unterseite des Rotors 2 einen Eingang des Rückführkanals 12 bzw. der Rückführkanäle 12 wenigstens teilweise verdeckt. Im vorliegenden Ausführungsbeispiel verdeckt der Vorsprung 27 den Eingang des in Figur 1 dargestellten Rückführkanals 12 vollständig.

Es ist bevorzugt, dass der Rotor 2 eine Rotorkappe 14 umfasst, wobei die Rotorkappe 14 vorzugsweise an einem unteren Ende des Rotors 2 befestigt ist. Die Rotorkappe 14 kann beispielsweise mittels Ultraschallschweißen mit einer Unterseite des Rotorkörpers 3 verbunden sein. Ganz besonders bevorzugt umfasst die Rotorkappe 14 den Vorsprung 27. Der Vorsprung 27 bzw. die Rotorkappe 14 schirmt die Trennelemente 13 von dem unteren Hohlraum 11b ab, wodurch die Turbulenzen auf einen sehr viel kleineren Raum beschränkt und die Verluste aufgrund von Turbulenzen in diesem Bereich deutlich verringert werden.

Das Drehlager 5 umfasst vorzugsweise einen Kohlenstoff und insbesondere ein Graphit. Bevorzugt weist das Drehlager 5 ein Bindemittel und insbesondere ein Polymer auf. Die Achse 23 besitzt eine effektive Länge AL, welche derjenigen axialen Länge entspricht, mit welcher die Achse 23 aus der Achsfixierung 42 bzw. dem Boden 16a heraustritt und mit welcher Kontaktflächen für das Drehlager 5 bereitgestellt werden. Das Drehlager 5 weist eine effektive Drehlagerlänge DL auf, welche einer bereitgestellten axialen Kontaktlänge zwischen dem Drehlager 5 und der Achse 23 entspricht. Das Verhältnis DL/AL entspricht in diesem Ausführungsbeispiel 0,72.

Vorzugsweise ist in Strömungsrichtung zwischen dem Einlass 8 und dem Pumpenrad 6 eine Spinne 22 angeordnet. Die Spinne 22 dieses Ausführungsbeispiels umfasst drei Beine, welche auf einer Innenseite des Einlasses 8 befestigt sind. Die Spinne 22 weist bevorzugt an ihrer Unterseite eine Aufnahme 40 auf.

In diesem Ausführungsbeispiel ist eine Achshalterung 24 in die Aufnahme 40 eingepresst. Die Achshalterung umfasst vorzugsweise ein Metall und insbesondere einen Stahl bzw. Edelstahl. Mit Vorteil erlaubt die Achshalterung 24 der Achse 23 ein axiales Gleiten, jedoch kein radiales Spiel. Es ist bevorzugt, dass das Drehlager 5 axial auf der Achse 23 gleiten und sich um die Achse 23 drehen kann, jedoch kein radiales Spiel zur Achse 23 aufweist. Die Achshalterung weist eine effektive Länge HL in axialer Richtung auf, welche einer Kontaktlänge mit der Achse 23 entspricht. Vorzugsweise entspricht ein Verhältnis HL/AL wenigstens 0,07 bzw. 0,10 bzw. 0,12 bzw. 0,14 bzw. 0,16. Es ist sehr bevorzugt, dass die Summe aus DL+HL wenigstens 0,5 bzw. 0,6 bzw. 0,7 bzw. 0,8 bzw. 0,9 AL entspricht.

Vorzugsweise umfasst das untere Gehäuseteil 15b einen unteren Gehäuseflansch 31b. Mit Vorteil liegt der untere Gehäuseflansch 31b an dem Halterflansch 30 des Statorhalters 29 an. Es bevorzugt, dass der Halterflansch 30 an dem Trennwandflansch 16d anliegt. Vorzugsweise ist der Halterflansch 30 zwischen dem Trennwandflansch 16d und dem unteren Gehäuseflansch 31b angeordnet. Es ist bevorzugt, dass der Trennwandflansch 16d zwischen dem oberen Gehäuseflansch 31a und dem Halterflansch 30 bzw. den unteren Gehäuseflansch 31b befindlich ist.

Es ist sehr bevorzugt, dass der obere Gehäuseflansch 31a, der Trennwandflansch 16d, der Halterflansch 30 und/oder der untere Gehäuseflansch 31b mittels einer Befestigungsvorrichtung zusammengepresst sind. Die Befestigungsvorrichtung ist vorzugsweise eine Schraubverbindung. Es ganz besonders bevorzugt, dass die Befestigungsvorrichtung 41 bzw. die Schraubvorrichtung den oberen Gehäuseflansch 31a, den Trennwandflansch 16d, den Halterflansch 30 und/oder den unteren Gehäuseflansch 31b durchgreift.

Es ist möglich, dass die Pumpe wenigstens eine Halterdichtung 20b und vorzugsweise zwei Halterdichtungen 20b aufweist. In diesem Ausführungsbeispiel ist eine Halterdichtung 20b in einem Längsschnitt der Pumpe zwischen dem Statorhalter 29 und dem unteren Gehäuseteil 15b angeordnet. Es ist möglich, dass eine Halterdichtung 20b zwischen dem Statorhalter 29 und der Trennwand 16 angeordnet ist.

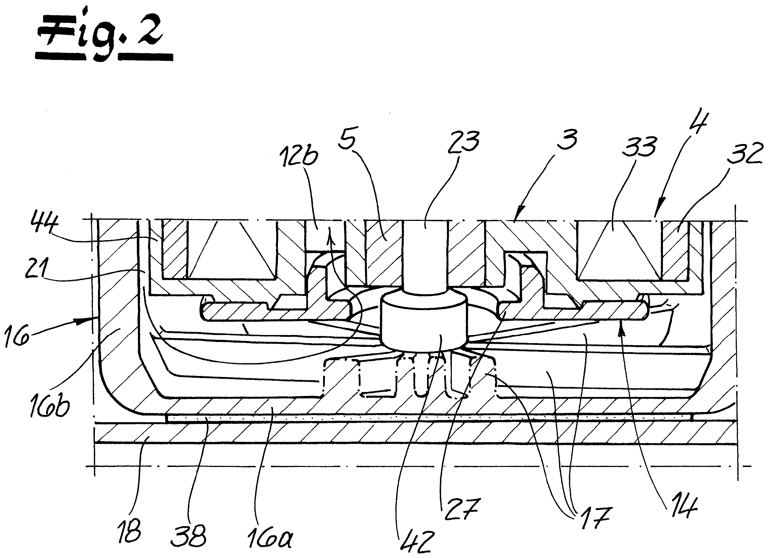

In Figur 2 ist der Boden 16a der Trennwand 16 perspektivisch dargestellt, sodass eine bevorzugte sternförmige Anordnung der Rippen 17 dieses Ausführungsbeispiels erkennbar wird. Die Rippen 17 verlaufen mit ihrer Längsausdehnung vorzugsweise von einem radial äußeren Bereich des Bodens 16a zu einem radial inneren Bereich des Bodens 16a bzw. zu der Achsfixierung 42 im radialen Zentrum des Bodens 16a. Das von der Achsfixierung 42 umspritzte untere Ende der Achse 23 kann eine Asymmetrie - beispielsweise eine Nut - aufweisen, wodurch eine drehfeste Fixierung der Achse 23 in dem Boden 16a bzw. in der Achsfixierung 42 gewährleistet wird. Diese stabile Bodenstruktur bzw. Achsfixierung 42 erlaubt in Verbindung mit der ebenfalls stabilen Achshalterung 24 eine exakte Positionierung der Achse. Hierdurch wird insbesondere eine große Laufruhe des Rotors 2 um die Achse 23 gewährleistet, welche insbesondere noch durch das sehr lang ausgedehnte Drehlager 5 unterstützt wird. Im Ergebnis werden eine große Laufruhe und ein geringer Verschleiß erzielt.

In Figur 2 ist ferner die Struktur der Rotorkappe 14 etwas besser erkennbar. Ein weiterer Vorsprung der Rotorkappe erstreckt sich in axialer Richtung in den Rückführkanal 12 bzw. in die Rückführkanäle 12 hinein. Dieser weitere Vorsprung hat im Wesentlichen den Zweck der korrekten Positionierung der Rotorkappe 14 auf dem Rotor 2.

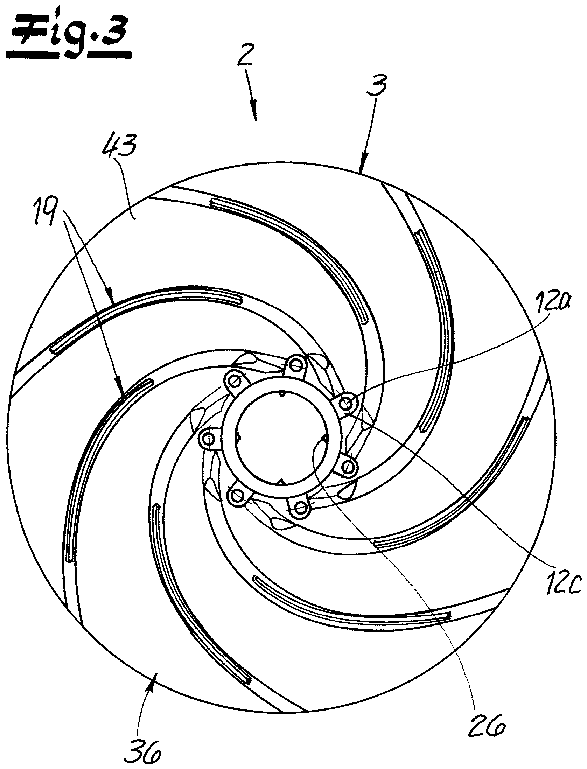

In Figur 3 ist eine Draufsicht des Rotorkörpers 3 abgebildet, sodass die oberen Abschnitte 12a und die Ausgänge 12c der Rückführkanäle 12 zu sehen sind. Es ist bevorzugt, dass jeder Ausgang einer Schaufel 19 bzw. einem Schaufelkanal 43 zugeordnet ist. Vorzugsweise umfassen die Schaufeln 19 auf ihrer Oberseite Steckelemente zum Eingriff in den in Figur 3 nicht abgebildeten Raddeckel 25. Vorzugsweise umfasst der Rotorkörper 3 auf seiner radialen Innenseite Eingriffelemente 26, welche in einen Eingriff mit dem in Figur 3 nicht abgebildeten Drehlager 5 gebracht werden. In diesem Ausführungsbeispiel umfasst das Drehlager 5 vier axial verlaufende Nuten auf seiner Außenseite, welche komplementär zu den Eingriffelementen 26 des Rotorkörpers 3 in Figur 3 ausgebildet sind.

In Figur 4 ist schließlich eine Untersicht des Rotorkörpers 3 gezeigt, wobei die Rotorkappe 14 der Einfachheit halber - ebenso wie alle anderen Elemente mit Ausnahme des Rotorkörpers 3 - weggelassen wurden. Gut zu erkennen sind nun die Rückführkanäle 12 sowie die Trennelemente 13. Die Trennelemente 13 sind vorzugsweise stegartig ausgebildet. Mit Vorteil erstrecken sich die Trennelemente 13 in einem Querschnitt des Rotorkörpers 3 in tangentialer Richtung. Die Trennelemente 13 drehen sich im Uhrzeigersinn, sodass die gewählte tangentiale Ausrichtung der Trennelemente 13 eine erste Turbulenz verringernde Maßnahme darstellt. Diese Maßnahme wird insbesondere noch durch die in Fig.4 nicht dargestellte Rotorkappe 14 ergänzt.

In Figur 4 ist gut erkennbar, dass vorzugsweise der untere Abschnitt 12b eines jeden Rückführkanals 12 hinsichtlich seiner Querschnittsfläche deutlich größer ist als ein oberer Abschnitt 12a des jeweiligen Rückführkanals 12. Die unteren Abschnitte 12b der Rückführkanäle 12 bieten ein großes Volumen, um den Rotorblock 4 möglichst gut zu kühlen. Ein größeres Volumen des unteren Abschnitts 12b der Rückführkanäle 12 wäre nur möglich auf Kosten dünnerer Trennelemente 13 oder einer dünneren Innenwand des Rotorkörpers 3, welche an dem Drehlager 5 anliegt. Die oberen Abschnitte der Rückführkanäle 12a sind zum einen deshalb recht klein, damit diese besser den einzelnen Schaufelkanälen 43 zugeordnet werden können.

**Bezugszeichenliste**

| | | | |
|---|---|---|---|
| A | Rotationsachse | 19 | Schaufel von 6 |
| 1 | Stator | 20a | Fluiddichtung |
| 2 | Rotor | 20b | Halterdichtungen |
| 3 | Rotorkörper | 21 | Ringspalt |
| 4 | Rotorblock | 22 | Spinne |
| 5 | Drehlager | 23 | Achse |
| 6 | Pumpenrad | 24 | Achshalterung |
| 7 | Welle | 25 | Raddeckel von 2 |
| 8 | Einlass | 26 | Eingriffelement von 3 |
| 9 | Auslass | 27 | Vorsprung von 2, 14 |
| 10 | Radkammer | 28 | Sammelkanal |
| 11 | Antriebskammer | 29 | Statorhalter |
| 11a | oberer Hohlraum | 30 | Halterflansch |
| 11b | unterer Hohlraum | 31a | oberer Gehäuseflansch von 15a |
| 12 | Rückführkanäle | | |
| 12a | oberer Abschnitt | 31b | unterer Gehäuseflansch von 15b |
| 12b | unterer Abschnitt | | |
| 12c | Ausgang | 32 | Magnete |
| 13 | Trennelemente | 33 | Rotorkern |
| 14 | Rotorkappe | 34 | Statorkern |
| 15 | Gehäuse | 35 | Statorwicklungen |
| 15a | oberes Gehäuseteil | 36 | Radteller |
| 15b | unteres Gehäuseteil | 37 | umlaufender Spalt |
| 16 | Trennwand | 38 | Wärmeleitelement |
| 16a | Boden | 39 | elektrische Verbindung |
| 16b | Seitenwand | 40 | Aufnahme von 22 |
| 16c | Kragen | 41 | Befestigungsvorrichtung |
| 16d | Trennwandflansch | 42 | Achsfixierung |
| 17 | Rippen von 16 | 43 | Schaufelkanal |
| 18 | Platine | 44 | Blockgehäuse |

## Patentansprüche

1. Pumpe zum Antreiben eines Fluids, vorzugsweise eines Temperiermittels, insbesondere zur Verwendung in einem Fahrzeug, ganz besonders zur Verwendung zum Temperieren einer Antriebsbatterie eines Elektrofahrzeugs, wobei die Pumpe einen Stator (1) und einen Rotor (2) umfasst, wobei der Rotor (2) einen Rotorkörper (3), einen Rotorblock (4) sowie ein Drehlager (5) umfasst, wobei der Rotor (2) um eine Rotationsachse (A) drehbar gelagert ist, wobei der Rotor (2) bzw. Rotorkörper (3) ein Pumpenrad (6) und eine Welle (7) aufweist, wobei der Rotor (2) bzw. der Rotorkörper (3) ein Blockgehäuse (44) umfasst, das den Rotorblock (4) wenigstens teilweise einhaust, wobei in einer axial oberen Hälfte der Pumpe wenigstens ein Abschnitt eines Einlasses (8) der Pumpe angeordnet ist, wobei die Pumpe einen Auslass (9) umfasst.

2. Pumpe nach Anspruch 1, wobei die Pumpe ein Gehäuse (15) und eine Trennwand (16) umfasst, wobei die Trennwand (16) einen Raum innerhalb des Gehäuses (15) in einen Nassbereich und einen Trockenbereich trennt, wobei der Nassbereich vorzugsweise eine Radkammer (10) und eine Antriebskammer (11) aufweist, wobei das Pumpenrad (6) in der Radkammer (10) befindlich ist, wobei das Blockgehäuse (44) bevorzugt in der Antriebskammer (11) angeordnet ist.

3. Pumpe nach Anspruch 1 oder 2, wobei das Pumpenrad (6) in Strömungsrichtung eines Hauptstrompfads des Fluids zwischen dem Einlass (8) und dem Auslass (9) angeordnet ist, wobei die Pumpe vorzugsweise so ausgebildet ist, dass von dem Hauptstrompfad ein Sekundärstrompfad des Fluids abzweigt und der Sekundärstrompfad sich von der Radkammer (10) in die Antriebskammer (11) erstreckt.

4. Pumpe nach Anspruch 3, wobei der Rotor (2) bzw. Rotorkörper (3) für den Sekundärstrom wenigstens einen Rückführkanal (12) und bevorzugt mehrere Rückführkanäle (12) aufweist, die eine fluidische Verbindung zwischen der Antriebskammer (11) und der Radkammer (10) herstellen, wobei die Rückführkanäle (12) vorteilhafterweise über Trennelemente (13) des Rotors (2) bzw. Rotorkörpers (3) voneinander getrennt sind.

5. Pumpe nach einem der Ansprüche 1 bis 4, wobei die Pumpe eine rotatorisch nicht bewegliche Achse (23) umfasst, wobei bevorzugt ist, dass der Rotor (2) drehbar auf der Achse (23) gelagert ist.

6. Pumpe nach einem der Ansprüche 1 bis 5, wobei der Rotor (2) in einem Längsschnitt der Pumpe einen Vorsprung (27) zur Turbulenzverringerung aufweist, wobei der Vorsprung (27) in radialer Richtung vorspringt und bevorzugt mit Blickrichtung auf eine Unterseite des Rotors (2) einen Eingang eines Rückführkanals (12) wenigstens teilweise verdeckt.

7. Pumpe nach einem der Ansprüche 1 bis 6, wobei der Rotor (2) eine Rotorkappe (14) umfasst, wobei die Rotorkappe (14) an einem unteren Ende des Rotors (2) befestigt ist.

8. Pumpe nach einem der Ansprüche 1 bis 7, wobei der Rotorkörper (3) einstückig und vorzugsweise integral ausgebildet ist.

9. Pumpe nach einem der Ansprüche 1 bis 8, wobei das Blockgehäuse (44) den Rotorblock (4) in radialer Richtung wenigstens entlang eines axialen Abschnitts und wenigstens entlang eines Umlaufabschnitts umschließt.

10. Pumpe nach einem der Ansprüche 1 bis 9, wobei die Pumpe eine Platine (18) zur Steuerung des Pumpenbetriebs aufweist, wobei die Platine (18) bevorzugt an einer Außenseite der Trennwand (16) angeordnet ist.

11. Pumpe nach einem der Ansprüche 4 bis 10, wobei die Rückführkanäle (12) innerhalb des Rotors (2) bzw. Rotorkörpers (3) befindlich sind, wobei der Rotor (2) bzw. der Rotorkörper (3) bevorzugt wenigstens axial abschnittsweise wenigstens einen Rückführkanal (12) in einem Querschnitt vollständig umschließt.

12. Pumpe nach einem der Ansprüche 5 bis 11, wobei das Drehlager (5) eine effektive axiale Drehlagerlänge DL aufweist, wobei die Achse (23) eine effektive Achslänge AL aufweist, wobei das Verhältnis DL/AL größer oder gleich 0,4, vorzugsweise 0,5 und weiter vorzugsweise 0,6 ist.

13. Pumpe nach einem der Ansprüche 5 bis 12, wobei das Drehlager (5) entlang wenigstens eines axialen Abschnitts über einen vollen Umfang an der Achse (23) anliegt bzw. nutenfrei ist.

14. Pumpe nach einem der Ansprüche 5 bis 13, wobei die Pumpe eine Achshalterung (24) aufweist, wobei die Achshalterung (24) bevorzugt in einer oberen Hälfte bzw. einem oberen Drittel bzw. einem oberen Viertel der Achse (23) angeordnet ist.

15. Pumpe nach einem der Ansprüche 1 bis 14, wobei in Strömungsrichtung zwischen dem Einlass (8) und dem Pumpenrad (6) eine Spinne (22) angeordnet ist, wobei die Spinne (22) vorzugsweise an dem Gehäuse (15) bzw. dem oberen Gehäuseteil (15a) befestigt ist.

16. Pumpe nach einem der Ansprüche 2 bis 15, wobei zwischen einer radialen Außenseite des Antriebsabschnitts (19) der Welle (7) und einer Innenseite der Trennwand (16) ein Ringspalt (21) verläuft, so dass vorzugsweise der Sekundärstrompfad einen oberen Hohlraum (11a) der Antriebskammer (11) mit einem unteren Hohlraum (11b) der Antriebskammer (11) fluidisch verbindet.

17. Pumpe nach einem der Ansprüche 2 bis 16, wobei die Trennwand (16) auf der Innenseite in einem unteren Bereich der Antriebskammer (11) Rippen (17) aufweist.

18. Pumpe nach einem der Ansprüche 2 bis 17, wobei die Trennwand (16) einen Thermoplast aufweist, wobei die Trennwand (16) bevorzugt einen Leitfähigkeitszusatz zur Erhöhung der thermischen Leitfähigkeit umfasst.

19. Pumpe nach einem der Ansprüche 1 bis 18, wobei die Pumpe einen Statorhalter (29) umfasst, wobei der Statorhalter (29) vorzugsweise einen Halterflansch (30) umfasst, wobei der Halterflansch bevorzugt (30) an einem Gehäuseflansch (31a, 31b) anliegt.

20. Pumpe nach einem der Ansprüche 2 bis 19, wobei die Pumpe ein unteres Gehäuseteil (15b), ein Statoraggregat, ein Trennwandaggregat und ein oberes Gehäuseteil (15a) umfasst, wobei das Statoraggregat den Stator (1) und vorzugsweise einen Statorhalter (29) aufweist, wobei das Trennwandaggregat die Trennwand (16) und vorzugsweise eine Achse (23) umfasst, wobei die Pumpe in der Reihenfolge
- unteres Gehäuseteil (15b)
- Statoraggregat
- Trennwandaggregat
- Rotor (2)
- oberes Gehäuseteil (15a)
oder in der umgekehrten Reihenfolge zusammensetzbar ist.
